# EUROPEAN PATENT SPECIFICATION

(11) **EP 2 316 179 B1**
(45) Date of publication and mention of the grant of the patent: **22.02.2012**
(21) Application number: 09809328.9
(22) Date of filing: 24.08.2009
(51) Int. Cl.: H04J 3/06, G05B 19/042

(54) **TIME SYNCHRONIZATION IN INDUSTRIAL PROCESS CONTROL OR AUTOMATION SYSTEMS**
ZEITSYNCHRONISIERUNG IN INDUSTRIELLEN PROZESSSTEUERUNGS- ODER AUTOMATISIERUNGSSYSTEMEN
SYNCHRONISATION TEMPORELLE DANS DES SYSTÈMES DE COMMANDE OU D'AUTOMATISATION DE PROCÉDÉ INDUSTRIEL

(30) Priority: 29.08.2008 EP 08163244
(43) Date of publication of application: 04.05.2011
(73) Proprietor: ABB Research Ltd., 8050 Zürich (CH)
(72) Inventor: TOURNIER, Jean-Charles, 01200 Bellegarde sur Valserine (FR); WERNER, Thomas, CH-5404 Baden (CH)
(86) International application number: PCT/EP2009/060861
(87) International publication number: WO 2010/023175

(56) References cited:
- EP-A- 0 722 233
- US-A- 5 519 726
- US-A- 6 157 957
- US-A1- 2001 021 196
- US-A1- 2008 198 868
- US-B1- 6 535 926
- JEAN-CHARLES TOURNIER ET AL: "Improving reliability of IEEE1588 in electric substation automation" PRECISION CLOCK SYNCHRONIZATION FOR MEASUREMENT, CONTROL AND COMMUNICATION, 2008. ISPCS 2008. IEEE INTERNATIONAL SYMPOSIUM ON, IEEE, PISCATAWAY, NJ, USA, 22 September 2008 (2008-09-22), pages 65-70, XP031354125 ISBN: 978-1-4244-2274-6 cited in the application
- PAOLO FERRARI ET AL: "Synchronization of the Probes of a Distributed Instrument for Real-Time Ethernet Networks" INFORMATION SCIENCES AND SYSTEMS, 2007. CISS '07. 41ST ANNUAL CON FERENCE ON, IEEE, PI, 1 October 2007 (2007-10-01), pages 33-40, XP031161275 ISBN: 978-1-4244-1063-7

## Description

### FIELD OF THE INVENTION

The invention relates to the field of time synchronizing a plurality of devices of an industrial process control or automation system, and in particular of a Substation Automation system of a substation of an electric power transmission system.

### BACKGROUND OF THE INVENTION

Substations in high and medium-voltage power networks include primary devices such as electrical cables, lines, bus bars, switches, power transformers and instrument transformers, which are generally arranged in switch yards and/or bays. These primary devices are operated in an automated way via a Substation Automation (SA) system. The SA system comprises secondary devices, so-called Intelligent Electronic Devices (IED), responsible for protection, control and monitoring of the primary devices. The IEDs may be assigned to hierarchical levels, i.e. the station level, the bay level, and the process level, the latter being separated from the bay level by a so-called process interface. The station level of the SA system includes an Operator Work Station (OWS) with a Human-Machine Interface (HMI) and a gateway to a Network Control Centre (NCC). IEDs on the bay level, also termed bay units, in turn are connected to each other as well as to the IEDs on the station level via an inter-bay or station bus primarily serving the purpose of exchanging commands and status information. IEDs on the process-level comprise electronic sensors for voltage (VT), current (CT) and gas density measurements, contact probes for sensing switch and transformer tap changer positions, and/or intelligent actuators (I/O) for controlling switchgear like circuit breakers or disconnectors.

Generally, the internal local clock of a substation IED may present a drift of up to 0.1 ms per sec, while even for a PC with a medium quality clock, a drift of 0.015 ms per sec is normal. However, for the purpose of synchronization with other internal data, sampling of analogue signals by an Analogue to Digital (AD) converter of an IED such as non-conventional current and voltage transformers having a digital output, dedicated merging units, or bay units, require correct time stamping. To this end, the IEDs as clock clients or slaves periodically exchange messages with a clock server or master connected to the communication network of the SA system in order to evaluate the relative offset and drift of their local clock. Standard two-way time synchronisation protocols such as IEEE 1588 (IEEE Std 1588-2002, IEEE Standard for a Precision Clock Synchronization Protocol for Networked Measurement and Control Systems) define methods for synchronising devices via a communication network such as a Local Area Network (LAN), to a high precision (better than one microsecond).

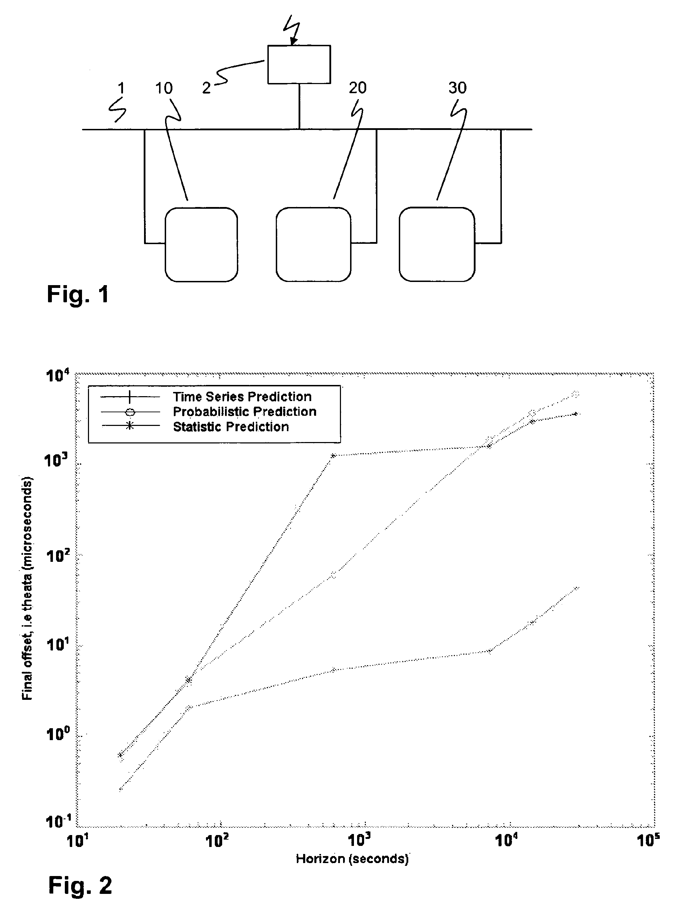

From a time synchronization point of view, a typical SA system has the following architecture as depicted in Fig.1. A GPS signal is received by a network device, called the grand master clock, inside the SA system. The grand master clock transmits the GPS time using the IEEE 1588 protocol to the devices (mostly IEDs, but also station PCs, gateways, transient fault recorders) connected to the network over TCP/IP.

In the architecture outlined, the GPS signal and its receiving part represent a single point of failure since the loss of the GPS means that the grand master clock will be running on its own, local clock which is of lower accuracy than the GPS clock. As an example, the consequences of solar winds, atmospheric disturbances, or thunderstorms hitting the GPS antenna may cause the loss of the correct time. Likewise, temporary islanding, for political, IT security, or maintenance reasons, the SA system by deliberately disconnecting it from a Wide Area Network may cause the grand master clock to run on its own. As a consequence, de-synchronization of geographically distant SA systems may render differential protection functions inoperable.

Conventionally, in the case of a transient failure of the GPS signal, a new master clock, called *transient master*, will be elected among the devices and will propagate its own time on the network. Due to environmental conditions (e.g. temperature and pressure) or hardware imperfections (e.g. quartz quality), the transient master clock will drift from the GPS clock. Once the GPS signal comes back and the grand master clock takes over again, an offset will appear between the time sent by the GPS and the one present on the network. This can lead to a situation in which all devices will have to go through a re-synchronization stage. A re-synchronization stage implies an interruption of the control and protection functions running on the devices, as well as an abrupt change of the devices' time base which in turn may lead to a malfunctioning of the protection algorithms depending on time-tagged data snapshots.

US 4602375 is concerned with an on-board satellite clock correction system of the type wherein phase errors between the satellite clock and a ground-based clock are determined and a clock correction value is sent to the satellite. The clock correction value is determined by curve-fitting the determined phase errors in accordance with a polynomial function, updating the polynomial function coefficients so as to minimize discrepancy between the determined phase errors and those according to the polynomial function, predicting a clock drift in accordance with the polynomial function and calculating an error correction value in accordance with the predicted clock drift.

US 2001/0021196 discloses a first user transmitting first reference messages with first time base information over a bus (TTCAN) to a second user, and the second user acting as a timer if the information from the first user has not reached the second user before the expiry of a timing mark. The second user may transmit its view of a global time, which is determined based on a presumed constant offset.

US 6157957 discloses a clock synchronization method for converting a node local time into a master time base, by exchanging timing information, recording a sequence of timing data and computing a local-to-master conversion function based on the timing data.

### DESCRIPTION OF THE INVENTION

It is an objective of the invention to improve availability of time-critical protection and control functions configured on devices of an industrial process control or automation system. This objective is achieved by a method of time synchronizing, and an industrial process control or automation system, according to claims 1 and 8. Further preferred embodiments are evident from the dependent patent claims.

According to the invention, improved time synchronization among the devices of an industrial process control or automation system is provided during a temporary absence of a system reference time. Hence, disruption of time-critical protection and control functions due to re-synchronization following the temporary absence of the system reference time is avoided, and the availability of the time-critical functions configured on the devices is increased. During normal operation, a device of the system records or stores an offset or discrepancy between the system reference time and an internal local clock of the device. As soon as the system reference time breaks down, the device starts predicting the offset or drift between its local clock and the unavailable system reference time based on the recorded offset. As a transient clock master, the device then distributes an approximated or transient system reference time, based on the device's local clock corrected for the predicted offset, to other devices of the system that in turn run time-critical protection and control function. According to the invention, different techniques or algorithms for predicting the offset are implemented. Depending on the length of the disruption period, i.e. the duration of system reference time absence or unavailability, the offset prediction reverts to a first or second offset prediction technique. The method retained for the offset prediction is a trade off between the required and provided accuracy as well as the available processing power and time.

The system reference time is most conveniently propagated to the devices of the system by exchanging time synchronization messages between a master clock device and slave devices according to IEEE 1588. The master clock device in turn is adapted to receive a Global Positioning System (GPS) signal comprising a global reference time. Hence the invention handles the temporary loss of the GPS signal (e.g. in the case of solar winds or atmospheric disturbances) causing a short disruption of the order of seconds to minutes, the loss of the GPS antenna receiver (e.g. the antenna being hit by a thunderstorm) and the loss of the master clock device (e.g. hardware failure), the latter two requiring human intervention and/or replacement of spare parts on a longer time scale of minutes to hours. Loss of GPS signal and/or antenna due to exposure to an unfavourable environment and/or long dispatch times for maintenance personnel are particularly crucial in remotely located substations of an electric power transmission system.

In advantageous embodiments of the invention, the disruption duration may be anticipated if the kind of system reference time unavailability (e.g. loss of GPS signal, antenna, or master clock device) can be determined. However, in case the latter is not possible, and/or in order to avoid unnecessarily precise offset predictions during short disruptions, a transient system reference time is initially determined according to the first technique. In case the disruption still persists after a certain amount of time, the transient system reference time is subsequently determined according to the second technique, which may be computationally more expensive and/or slower in exchange for a more reliable long-term prediction. The first transient master clock device distributing first time synchronization messages based on the first technique may or may not be identical with the second transient master clock device implementing the second prediction technique.

Preferably, the devices potentially acting as a transient clock master can devote sufficient processing capacity to store an offset history recorded during a period of several hours and compute a drift prediction based there upon. This is certainly true for the master clock device, which, in case of loss of GPS signal and/or antenna, can itself act as a transient clock master by relying on its local cock. On the other hand, and in order to prepare for the case of a failing master clock device, several if not all of the slave devices that in normal operation rely on the latter, may individually record an offset or drift history and calculate an offset forecast according to a single one or a number of prediction techniques. Out of these devices, one is elected as transient clock master according to a quality of the local clocks at the slave devices, or according to a kind of the system reference time unavailability.

In a further preferred variant of the invention, the device also records atmospheric quantities such as temperature and/or ambient pressure while recording the offset. With temperature being one of the main factors for quartz deviation, including the recorded temperature information in the evaluation of the offset history, and consulting a temperature forecast in the offset prediction further improves the quality of the transient system reference time.

In short, the invention reduces and ideally avoids the offset between the GPS clock and the time known in a Substation Automation (SA) system while a GPS signal or the grandmaster clock is not available. The protocol is self-configurable which allows dynamically adding or removing any participating devices (either master or slave) by electing the best available clock at runtime.This allows a smooth re-integration of the GPS clock in the system after a reasonable time frame not exceeding an order of 48 hours. The invention improves the reliability of the IEEE 1588 protocol without modifying the protocol itself and without requiring each and every Intelligent Electronic Devices (IEDs) of the SA system to participate. Finally, no hardware duplication in view of a fault-tolerant IEEE 1588 implementation or architecture is required either.

### BRIEF DESCRIPTION OF THE DRAWINGS

The subject matter of the invention will be explained in more detail in the following text with reference to preferred exemplary embodiments which are illustrated in the attached drawings, in which:
Fig.1 shows an excerpt of a Substation Automation (SA) system,
Fig.2 depicts the final offset for three different offset prediction techniques, and
Fig.3 depicts the corresponding processing times.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

Fig. 1 shows an excerpt of a Substation Automation (SA) system for a substation of an electric power transmission system as an example of an industrial process control or automation system. The SA system comprises a communication network 1, i.e. a station bus or a process bus extending beyond a single bay, and three Intelligent Electronic Devices (IEDs) or bay units 10, 20, 30 as exemplary network devices executing protection and control functions on behalf of a bay of the substation (not shown). A master clock device 2 or GPS receiver provides, e.g. through Ethernet-based protocols such as IEEE1588, a system reference time to the IEDs and thus assures time synchronization of the protection and control functions configured on the IEDs.

In the context of the present invention, two different configurations are considered: (a) the normal configuration where the GPS signal is received and propagated to the SA system; and (b) the faulty configuration, where the GPS signal is missing or the master clock computer is down or disconnected from the communication network. The main assumption of the invention is that the fault is transient, i.e. after a finite time the SA system will be back to the normal configuration. The switchback from a faulty to a normal configuration can occur due to the faulty configuration disappearing (e.g., GPS signal returning), or by a manual service exchanging/repairing the malfunctioning components.

During the normal configuration, one or several of the connected devices including the grand master clock records its offset over several hours or days. Once a new device is elected for transient master in the faulty configuration, it performs the normal tasks accomplished by any IEEE 1588 master, including specifically distribution of time synchronization messages over the network. However, the transient master, whenever reading its own local time from the device's internal clock, will estimate an offset to the presently unavailable GPS clock and correct the time signal which is distributed to the slaves accordingly.

The offset estimation is based on the offset history and can be performed by way of a *statistical* approach, either computing an average offset or by identifying patterns out of the history data via a data mining analysis. The pattern is either periodical, e.g. a profile over 24 hours, and/or related to an environmental parameter, e.g. temperature. On the other hand, a *probabilistic* approach may be used, wherein from the data history the probability of each offset value is evaluated and the most probable value is chosen. As with the computation of the statistical average, the advantage of this approach is that the prediction is performed only once. As a third and most accurate alternative, *time series* prediction involving a model to forecast future events based on known past events is proposed. Details about the time series approach can be found in the article "Improving Reliability of IEEE1588 in Electric Substation Automation " by Jean-Charles Tournier and Xiao Yin, presented at the International IEEE Symposium on Precision Clock Synchronization for Measurement, Control and Communication, IEEE ISPCS 2008, Ann Arbor, Michigan, USA, September 2008, XP031354125.

Fig.2 depicts the evolution of the final offset θ for each of the three prediction techniques (time series, statistical, probabilistic) as a function of the prediction horizon. The time series based prediction always performs better than the two other ones by a factor of 10 (for a horizon prediction of 20 seconds) to 100 (for a horizon prediction of 28800 seconds).

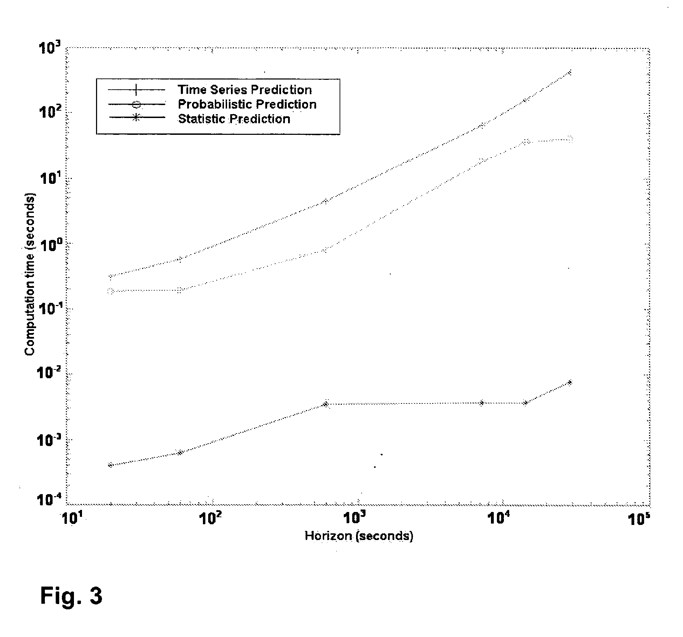

Fig.3 depicts the evolution of the processing time required for the three prediction techniques (time series, statistical, probabilistic) a function of the prediction horizon. The processing times reported stem from a specific simulation environment and are indicative of the relative computation requirements for each technique only. The statistical based approach requires low computation compared to the two other approaches. Moreover, this prediction technique is almost not sensitive to the length of the horizon prediction. On the other hand, the time series based approach is computationally intensive and highly influenced by the length of the prediction. The probabilistic based approach has a computing time profile similar to the time series one but with lower values.

From the foregoing results, different prediction techniques are suitable depending on the kind of the GPS disconnection:
- In the case of a short disconnection, i.e. in the order of a couple of seconds (e.g. atmospheric disturbances), a statistical based approach gives a good enough accuracy (less than 20 µsec) for protection functions at a low computational cost.
- On the other hand, in the case of a long disconnection, i.e. in the order of a couple of hours (e.g. loss of the GPS antenna or maintenance operations), a time series based prediction is more suitable. However, this kind of prediction can not be run on any device and has to be supported by a powerful enough computer.
- In the case of a medium disconnection in the order of a couple of minutes, the probabilistic prediction technique is an interesting alternative to the other prediction approaches since the results are still acceptable for some protection functions but at a lower computing price than with the time series based technique.

### LIST OF DESIGNATIONS

- 1: communication network
- 2: master clock device
- 10, 20, 30: network devices

## Claims

1. Method of time synchronizing a plurality of devices (2, 10, 20, 30) of an industrial process control or automation system interconnected through a communication network (1), wherein a master clock device (2) distributes time synchronization messages comprising a system reference time over the communication network to slave devices (10, 20, 30), comprising
- recording, by a device of the system, an offset history between the system reference time and a local clock at the device,
- deriving, by the device, an offset forecast based on the recorded offset history,
- calculating, by the device and upon disruption of the system reference time, a transient system reference time based on the local clock and the offset forecast, and
- distributing, by the device, time synchronization messages including the transient system reference time to other devices of the system,
**characterized in that** the method comprises
- deriving a first offset forecast according to a first prediction technique for a first disruption duration, and a second offset forecast according to a second prediction technique for a second disruption duration exceeding the first disruption duration.

2. The method according to claim 1, comprising
- recording, by a plurality of slave devices of the system, individual offsets between the system reference time and local clocks at the slave devices, and
- selecting a transient clock master from the recording slave devices.

3. The method according to claim 1, comprising
- measuring and recording an atmospheric quantity together with the offset, and
- deriving the offset forecast based on a prediction of the atmospheric quantity.

4. The method according to one of claims 1 to 3, wherein the first prediction technique is based on a statistical approach, and wherein the second prediction technique is based on a time series approach.

5. The method according to one of claims 1 to 3, wherein the automation system is a Substation Automation SA system of a substation of an electric power transmission system.

6. An industrial process control or automation system with a plurality of devices (2, 10, 20, 30) interconnected through a communication network (1), wherein a master clock device (2) distributes time synchronization messages comprising a system reference time over the communication network to slave devices (10, 20, 30), and with one or more of the devices (2, 10, 20, 30) of the system being adapted to
- record an offset history between the system reference time and a local device clock,
- derive a first and second offset forecast based on a recorded offset history and according to a first prediction technique for a first disruption duration, and according to a second prediction technique for a second disruption duration exceeding the first disruption duration, respectively,
- calculate, upon disruption of the system reference time, a transient system reference time based on the local device clock and an offset forecast, and
- distribute time synchronization messages including the transient system reference time to other devices of the system.

## Patentansprüche

1. Verfahren zum Zeitsynchronisieren mehrerer Einrichtungen (2, 10, 20, 30) eines industriellen Prozesssteuerungs- oder Automatisierungssystems, das durch ein Kommunikationsnetzwerk (1) verbunden ist, wobei eine Master-Zeitgebereinrichtung (2) Zeitsynchronisationsnachrichten, die eine Systemreferenzzeit umfassen, über das Kommunikationsnetzwerk an Slave-Einrichtungen (10, 20, 30) verteilt, mit den folgenden Schritten:
- eine Einrichtung des Systems zeichnet eine Versatzchronik zwischen der Systemreferenzzeit und einem lokalen Zeitgeber in der Einrichtung auf,
- die Einrichtung leitet auf der Basis der aufgezeichneten Versatzchronik eine Versatzvorhersage ab,
- bei Unterbrechung der Systemreferenzzeit berechnet die Einrichtung eine Transientensystem-Referenzzeit auf der Basis des lokalen Zeitgebers und der Versatzvorhersage und
- die Einrichtung verteilt Zeitsynchronisationsnachrichten, die die Transientensystem-Referenzzeit umfassen, an andere Einrichtungen des Systems,
**dadurch gekennzeichnet, dass** das Verfahren den folgenden Schritt umfasst:
- Ableiten einer ersten Versatzvorhersage gemäß einer ersten Prädiktionstechnik für eine erste Unterbrechungsdauer und einer zweiten Versatzvorhersage gemäß einer zweien Prädiktionstechnik für eine zweite Unterbrechungsdauer, die die erste Unterbrechungsdauer übersteigt.

2. Verfahren nach Anspruch 1, mit den folgenden Schritten:
- mehrere Slave-Einrichtungen des Systems zeichnen individuelle Versätze zwischen der Systemreferenzzeit und lokalen Zeitgebern in den Slave-Einrichtungen auf und
- es wird ein Transientenzeitgeber-Master aus den aufzeichnenden Slave-Einrichtungen ausgewählt.

3. Verfahren nach Anspruch 1, mit den folgenden Schritten:
- Messen und Aufzeichnen einer atmosphärischen Größe zusammen mit dem Versatz und
- Ableiten der Versatzvorhersage auf der Basis einer Prädiktion der atmosphärischen Größe.

4. Verfahren nach einem der Ansprüche 1 bis 3, wobei die erste Prädiktionstechnik auf einem statistischen Ansatz basiert und wobei die zweite Prädiktionstechnik auf einem Zeitreihenansatz basiert.

5. Verfahren nach einem der Ansprüche 1 bis 3, wobei das Automatisierungssyste m ein System der Substation Automation SA einer Schaltanlage eines elektrischen Energieübertragungssystems ist.

6. Industrielles Prozesssteuerungs- oder automatisierungssystem mit mehreren Einrichtungen (2, 10, 20, 30), die durch ein Kommunikationsnetzwerk (1) verbunden sind, wobei eine Master-Zeitgebereinrichtung (2) Zeitsynchronisationsnachrichten, die eine Systemreferenzzeit umfassen, über das Kommunikationsnetzwerk an die Slave-Einrichtungen (10, 20, 30) verteilt, und wobei eine oder mehrere der Einrichtungen (2, 10, 20, 30) de s Systems für Folgendes ausgelegt sind:
- Aufzeichnen einer Versatzchronik wischen der Systemreferenzzeit und einem lokalen Einrichtungszeitgeber,
- Ableiten einer ersten und zweien Versatzvorhersage auf der Basis der aufgezeichneten Versatzchronik und gemäß einer ersten Prädiktionstechnik für eine erste Unterbrechungsdauer bzw. gemäß einer zweiten Prädiktionstechnik für eine zweite Unterbrechungsdauer, die die erste Unterbrechungsdauer übersteigt,
- bei Unterbrechung der Systemreferenzzeit Berechnen einer Transientensystem-Referenzzeit auf der Basis des lokalen Einrichtungszeitgebers und einer Versatzvorhersage und
- Verteilen von Zeitsynchronisationsnachrichten, die die Transientensystem-Referenzzeit umfassen, an andere Einrichtungen des Systems.

## Revendications

1. Procédé de synchronisation temporelle d'une pluralité de dispositifs (2, 10, 20, 30) d'un système de commande ou d'automatisation de procédé industriel reliés entre eux par un réseau de communication (1), un dispositif horloge maîtresse (2) distribuant sur le réseau de communication des messages de synchronisation temporelle comprenant un temps de référence système à des dispositifs asservis (10, 20, 30), le procédé comprenant les étapes consistant à :
- enregistrer, au moyen d'un dispositif du système, un historique d'écart entre le temps de référence système et une horloge locale au niveau du dispositif,
- déduire, au moyen du dispositif, une prévision d'écart à partir de l'historique d'écart enregistré,
- calculer, au moyen du dispositif et en cas d'interruption du temps de référence système, un temps de référence système transitoire à partir de l'horloge locale et de la prévision d'écart, et
- distribuer, au moyen du dispositif, des messages de synchronisation temporelle comportant le temps de référence système transitoire à d'autres dispositifs du système,
le procédé étant **caractérisé en ce qu'**il comprend l'étape consistant à :
- déduire une première prévision d'écart conformément à une première technique de prévision pour une première durée d'interruption, et une deuxième prévision d'écart conformément à une deuxième technique de prévision pour une deuxième durée d'interruption supérieure à la première durée d'interruption.

2. Procédé selon la revendication 1, comprenant en outre les étapes consistant à :
- enregistrer, au moyen d'une pluralité de dispositifs asservis du système, des écarts individuels entre le temps de référence système et des horloges locales au niveau des dispositifs asservis, et
- sélectionner une horloge maîtresse transitoire parmi les dispositifs asservis d'enregistrement.

3. Procédé selon la revendication 1, comprenant les étapes consistant à :
- mesurer et enregistrer une grandeur atmosphérique conjointement avec l'écart, et
- déduire la prévision d'écart à partir d'une prévision de la grandeur atmosphérique.

4. Procédé selon l'une des revendications 1 à 3, la première technique de prévision étant basée sur une approche statistique, et la deuxième technique de prévision étant basée sur une approche chronologique.

5. Procédé selon l'une des revendications 1 à 3, le système d'automatisation étant un système d'automatisation de sous-station, SA, d'une sous-station d'un système de transport d'énergie électrique.

6. Système de commande ou d'automatisation de procédé industriel doté d'une pluralité de dispositifs (2, 10, 20, 30) reliés entre eux par un réseau de communication (1), un dispositif horloge maîtresse (2) distribuant par le réseau de communication des messages de synchronisation temporelle comprenant un temps de référence système à des dispositifs asservis (10, 20, 30), au moins un des dispositifs (2, 10, 20, 30) du système étant conçu pour :
- enregistrer un historique d'écart entre le temps de référence système et une horloge locale au niveau du dispositif,
- déduire des première et deuxième prévisions d'écart à partir de l'historique d'écart enregistré et conformément, respectivement, à une première technique de prévision pour une première durée d'interruption et à une deuxième technique de prévision pour une deuxième durée d'interruption supérieure à la première durée d'interruption,
- calculer, en cas d'interruption du temps de référence système, un temps de référence système transitoire à partir de l'horloge locale du dispositif et d'une prévision d'écart, et
- distribuer des messages de synchronisation temporelle comportant le temps de référence système transitoire à d'autres dispositifs du système.
